# NOUVEAU FASCICULE DE BREVET EUROPEEN

(11) **EP 1 989 013 B2**
(45) Date de publication et mention de la décision concernant l'opposition: **26.04.2017**
(45) Mention de la délivrance du brevet: 29.04.2009
(21) Numéro de dépôt: 07730944.1
(22) Date de dépôt: 08.02.2007
(51) Int. Cl.: B32B 9/04, B32B 15/18, B32B 37/00, C04B 35/536, F16J 15/12

(54) **JOINTS D'ETANCHEITE MULTICOUCHES GRAPHITE SOUPLE/METAL ADAPTES A DES CONDITIONS DE SERVICE A HAUTE TEMPERATURE**
FÜR HOCHTEMPERATURBETRIEBSBEDINGUNGEN GEEIGNETE MEHRLAGIGE (FLEXIBLER GRAPHIT/METALL)-DICHTUNGEN
MULTILAYER METAL/FLEXIBLE GRAPHITE SEALS SUITABLE FOR HIGH-TEMPERATURE SERVICE CONDITIONS

(30) Priorité: 10.02.2006 FR 0601243
(43) Date de publication de la demande: 12.11.2008
(73) Titulaire: Carbone Lorraine Composants, 92230 Genevilliers (FR)
(72) Inventeur: POTIER, Alexandre, F-92230 Gennevilliers (FR)
(74) Mandataire: Schmidt, Martin Peter
(86) Numéro de dépôt international: PCT/FR2007/000228
(87) Numéro de publication internationale: WO 2007/093688

(56) Documents cités:
- EP-A- 0 640 782
- EP-A2- 0 935 085
- EP-B1- 0 336 049
- DE-A1- 10 316 262
- DE-B4- 19 804 283
- FR-A1- 2 528 911
- GB-A- 2 154 675
- GB-A- 2 202 183
- GB-A- 2 327 202
- RU-C1- 2 177 413
- US-A- 4 234 638
- US-A- 4 911 972
- US-A- 5 509 993
- US-B1- 6 258 457

## Description

La présente invention se rapporte au domaine de la fabrication de joints d'étanchéité plans réalisés par des empilements alternés de graphite souple et de feuilles métalliques perforées, capables de supporter des conditions de température élevée, supérieure à 300°C par exemple sans subir de dégradation de leur qualité et ceci même sous des contraintes de serrage du joint très élevées.

### Etat de la technique

Le graphite souple est élaboré par expansion thermique de graphite (le plus souvent sous forme de paillettes), dans lequel des atomes ou molécules ont été insérés suite à une attaque en milieu acide ; le matériau ainsi obtenu a une masse spécifique très faible et possède la propriété de s'auto-agglomérer sans aucun liant par simple effet mécanique. Ainsi on obtient, par laminage ou compression un matériau souple ou semi-rigide sous la forme de rouleaux ou de plaques.

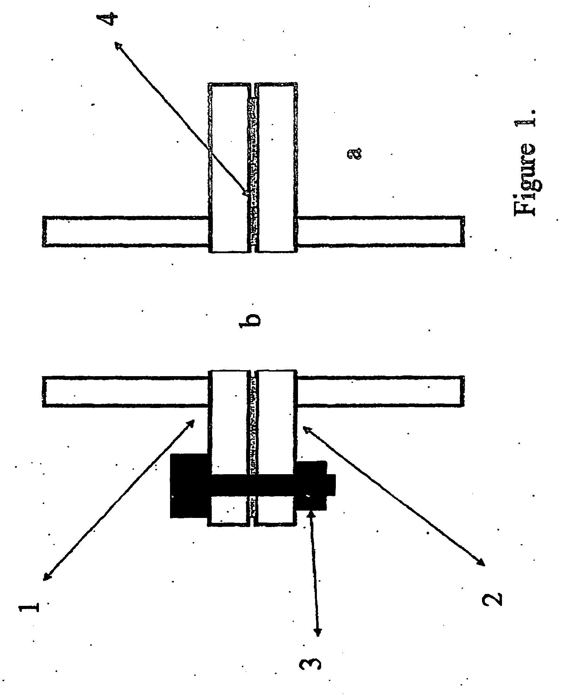

Les feuilles de graphite souple sont utilisées depuis longtemps pour la fabrication de joints d'étanchéité plats. De tels joints d'étanchéité plans sont utilisés par exemple dans des installations de l'industrie chimique ou pétrochimique pour le transports de fluides chauds et corrosifs, ainsi que dans les centrales de production d'énergie thermique ou nucléaire pour le transport de vapeur d'eau sous pression. L'utilisation d'un joint d'étanchéité plan est illustrée de manière schématique sur la figure 1. Deux brides métalliques (1,2) relient entre eux deux conduits tubulaires (5,6) formant ainsi une canalisation. Le serrage des deux brides métalliques (1, 2) au moyen des boulons (3) situés sur la périphérie du montage, permet le pincement de la feuille de graphite souple (4) agissant comme joint d'étanchéité. Les caractéristiques de souplesse et la capacité de déformation du graphite souple lui permettent de se conformer aux surfaces en regard des brides métalliques et d'assurer une bonne étanchéité entre l'intérieur de la canalisation (a) et le milieu externe (b). Les qualités de stabilité thermique et de grande inertie chimique du graphite souple, particulièrement vis à vis des liquides organiques ou acides en ont fait le matériau de choix dans de nombreuses situations.

Trois caractéristiques sont donc déterminantes pour la qualité des joints d'étanchéité plans : l'aptitude à étancher (exprimée sous la forme d'un taux de fuite mesuré dans des conditions normalisées), la température maximale de dégradation des matériaux constituant le joint, et enfin le maintien des caractéristiques mécaniques de la structure du joint dans la gamme de température d'utilisation des matériaux le constituant. Les caractéristiques du joint doivent toujours permettre d'une part son adaptation aux surfaces contre lesquelles il est pressé, et d'autre part sa résistance au fluage pour maintenir au cours du temps et des cycles thermiques la pression de serrage des brides, ceci pour garantir au fil du temps l'étanchéité.

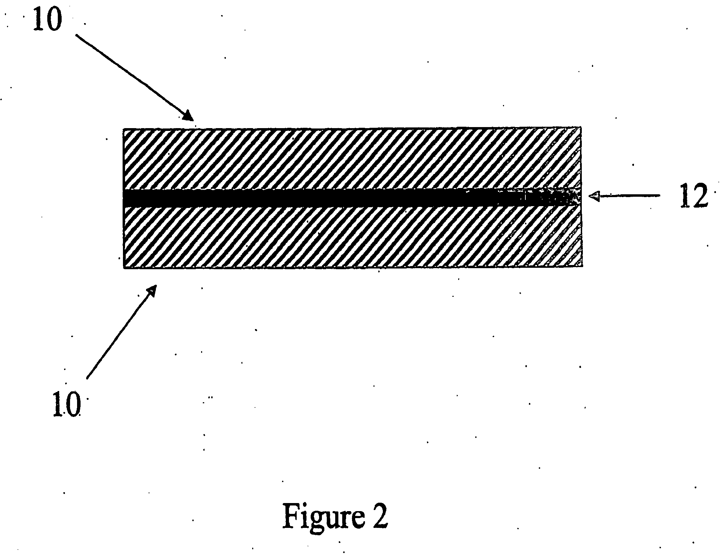

Malgré une tenue à la température sous air jusqu'à 500°C voire 550°C pour certaines qualités de graphite souple, les feuilles de graphite souple souffrent de plusieurs inconvénients. Elles sont difficiles à manipuler, elles se déchirent relativement facilement, et il est difficile de les produire en fortes épaisseurs. Les producteurs de feuilles de graphite souple ont ainsi développé des empilements multi-matériaux, en général des empilements alternés de feuilles de métal et de graphite souple, afin de rendre l'emploi des joints d'étanchéité plus pratique et de les rendre plus résistants mécaniquement. Il est très commun aujourd'hui d'utiliser un joint constitué d'un empilement tel que celui décrit dans la figure 2, où deux feuilles de graphite souple (10, 11) sont liées à une feuille (insert) métallique centrale (12). Ces joints sont sollicités également dans le sens parallèle aux couches qui les composent, du fait des fortes contraintes de compression mal réparties sur toute la surface du joint ; on appelle ce phénomène « le pincement de la bride ». Ils peuvent ainsi présenter un problème de fluage, notamment à haute température de service, lorsque la dilatation thermique déforme la géométrie de la bride. Le fluage est alors susceptible de limiter leur durée de vie et l'étanchéité du système dont ils font partie.

Suivant ce principe et pour principalement améliorer encore la tenue mécanique du joint, de nombreuses solutions ont été proposées. Ces solutions font intervenir des empilements de 3, 5, 7 couches ou plus suivant les épaisseurs du joint, différents matériaux pour les feuilles de renfort (différents métaux, feuilles pleines ou feuilles perforées, voire même des grilles), et différentes solutions pour assurer la liaison mécanique entre le graphite souple et la feuille de renfort. Parmi ces solutions de liaison on peut citer les deux principales technologies utilisées : soit un collage, soit un ancrage de moyens mécaniques de retenue dans les feuilles de graphite. Ces moyens mécaniques de retenue peuvent être des dômes ou picots résultant de la perforation d'une tôle mince ou feuille métallique à l'aide d'une pointe (voir la demande de brevet FR 2 625 281 (Dana Corporation)).

Dans cette association de matériaux de type feuilles de graphite souple attachées à une structure métallique rigide, les feuilles de graphite souple assurent la fonction de déformabilité / conformation aux surfaces de contact et d'étanchéité, alors que les renforts métalliques procurent l'avantage de solidité de l'ensemble, et permettent ainsi une manipulation aisée (y compris pour des joints de grandes dimensions) et confèrent à l'ensemble une bien meilleure résistance au fluage.

Pour fixer une feuille de graphite souple sur une tôle ou feuille métallique, on peut utiliser traditionnellement des colles ou adhésifs, mais ceux-ci i ne peuvent garantir une tenue mécanique au delà de 300°C. Les brevets EP 616 884, US 5,509,993 et US 6,962,349 (Sigri Great Lakes Carbon AG) décrivent l'utilisation de substances qui modifient l'interface entre le métal et le graphite, mais qui ne sont pas des colles, telles que certains composés organo-silicium, des composés perfluorés ou des savons métallique. Ces produits sont des promoteurs d'adhésion ; ils doivent être appliqués en une épaisseur de quelques nanomètres.. On fixe ainsi une couche de métal sur une couche de graphite sans colle par une technique de pressage à chaud, typiquement à une température comprise entre 150°C et 300°C (voir US 6,258,457 (SGL Technik GmbH)). Cette technique est cependant très coûteuse à mettre en oeuvre car peu productive, et elle ne garantit pas une tenue mécanique suffisante de l'assemblage au delà de 400°C.

Une autre approche technique utilise des moyens de retenue mécanique, que l'on peut obtenir en créant dans la feuille métallique de nombreuses perforations en forme de dôme (voir la demande de brevet européenne EP 0 640 782 A2 (Tako Payen S.p.a.), la demande de brevet française 2 625 281 (Dana Corporation), le brevet US 4,723,783 (Dana Corporation), le brevet US 4,723,783 (Dana Corporation), le brevet US 6,258,457 (SGL Technik GmbH)). Cependant, comme l'enseigne le brevet US 5,509,993 cité ci-dessus, la perforation des tôles en dôme induit des contraintes locales dans la tôle, ce qui peut conduire à des ruptures sous charge. Les empilements de feuilles de graphite souple attachées à des tôles métalliques présentent cependant encore quelques points faibles. Tout d'abord, les renforts métalliques perforés dans des épaisseurs de feuillards supérieures ou égales à 100 µm rendent plus difficiles la découpe des joints, opération qui permet d'obtenir les géométries désirées en partant de feuilles planes. Pour limiter cet inconvénient, la pratique commune est de limiter le nombre des renforts métalliques perforés et également de limiter leur épaisseur. On utilise typiquement un seul renfort métallique, parfois deux pour une épaisseur totale de 3 mm, rarement plus de deux, et cela uniquement pour des épaisseurs de joints supérieures à 3 mm. Les épaisseurs de feuillards sont le plus fréquemment proches de 100 microns.

En conclusion, les solutions de liaison entre couches par collage d'une part introduisent un élément (la colle) dont la tenue en température est limitée. Par ailleurs, elles imposent des procédés de production plus délicats à mettre en oeuvre que le simple colaminage utilisé pour lier une feuille perforée et une feuille de graphite souple. D'autre part, il existe aussi des procédés d'assemblage sans colle, mais ces procédés sont également complexes, car ils font appel à des procédés de pressage à chaud ainsi qu'à l'application en très faible épaisseur de produits chimiques qui modifient la surface.

Alors que le colaminage peut se concevoir aisément comme une opération produisant en continu un « sandwich » de matériaux, le collage exigea une enduction de surface, un séchage et le plus fréquement, surtout pour les colles capables de fonctionner à des températures de l'ordre de 300°C, un traitement thermique pour stabiliser les colles.

Cette suite d'opérations est soit effectuée par étapes successives, soit au moyen d'une suite complexe d'équipements fonctionnant en continu.

Dans tous les cas, le colaminage avec une tôle perforée semble être le procédé d'assemblage continu le plus économique, mais présente des inconvénients importants comme la difficulté de découpe par des moyens classiques.

D'une manière générale, lorsque la température d'utilisation dépasse 400°C et que les pressions des fluides à étancher sont trop importantes, les joints plats découpés dans des planches composites à base de graphite souples doivent être remplacés par des solutions plus sûres mais plus coûteuses ; ces solutions sont toutefois moins souples en terme dimensionnel, comme les joints spiralés, les joints striés et autres joints métalliques.

### Problème posé

Le problème auquel essaye de répondre la présente invention est donc de proposer un nouveau procédé de fabrication de planches et/ou de joints composées d'un empilement alterné de couches de graphite souple et de feuilles de métal permettant un découpage facile et une production en continue facile et économique, et qui présente une très bonne tenue mécanique jusqu'à des températures et pressions inaccessibles jusqu'à présent aux joints de bride plats, tout en garantissant une étanchéité selon les nouveaux standards visant à limiter les émissions fugitives de gaz écologiquement dangereux pour l'atmosphère.

### Objets de l'invention

L'objet de la présente invention est une planche composite réalisée par empilement alterné de (n+1) feuilles de graphite souple et de (n) feuilles de renfort métalliques perforées à picots, de manière à ce que la première et la dernière feuille dudit empilement alterné soient des feuilles de graphite souple,
la dite planche composite étant **caractérisée en ce que** :
a) n ≥ 2 ;
b) les épaisseurs des feuilles de graphite souple utilisées peuvent être égales ou différentes, et sont telles que toute tranche d'épaisseur de 2 mm dé la planche composite
   (i) comporte au moins 3 couches de graphite souple,
   (ii) présente une masse de graphite par unité de surface d'au plus 2,34 kg/m² ;
c) pour chacune des dites feuilles de renfort métalliques perforées, les picots présents sur ladite feuille ont une hauteur par rapport à la surface de ladite feuille qui ne dépasse pas 1,3 fois l'épaisseur de la plus fine des couches de graphite souple à laquelle elle est attachée;
d) l'épaisseur individuelle des feuilles de renfort métallique ne dépasse pas 60 µm.

Un autre objet est un joint d'étanchéité plan, produit par découpe d'une planche selon l'invention.

Encore un autre objet est l'utilisation d'un tel joint à une température ne dépassant pas 600°C, et préférentiellement à une température comprise entre 350°C et 550°C, et encore plus préférentiellement à une température comprise entre 400°C et 500°C.

### Description des figures

La figure 1 montre le schéma d'un joint d'étanchéité plan. La lettre (a) indique l'intérieur de la canalisation, la lettre (b) indique le milieu externe.
La figure 2 montre le schéma d'un empilement de type graphite souple / insert métallique souple / insert métallique / graphite / graphite souple.

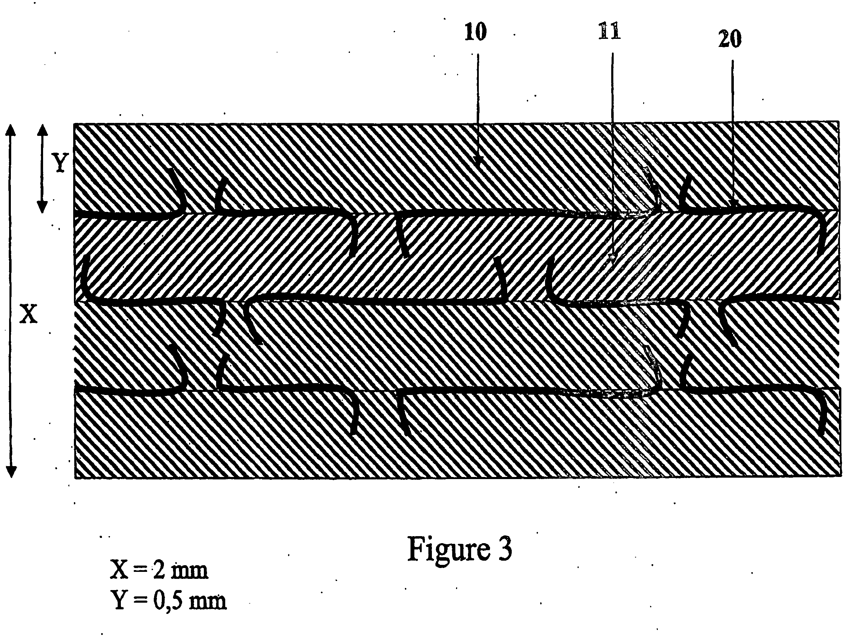

La figure 3 montre de manière schématique une coupe transversale à travers une planche composite selon l'invention.
La figure 4 montre le taux de fuite observé lors d'un essai normalisé à 300°C pour des joints d'une épaisseur de 2 mm coupés dans des planches composites de structures différentes (nombre de feuilles métalliques, trois valeurs différentes pour la densité du graphite).
La figure 5 montre l'agencement des perforations de la tôle métallique pour une réalisation selon l'invention. Les dimensions sont données en millimètres.

### Description détaillée de l'invention

Selon l'invention, le problème est résolu par une planche facilement découpable en un joint plat qui présente à la température ambiante des caractéristiques de résistance à la pression de serrage similaires voire supérieures aux assemblages multicouches classiques, mais qui garde d'excellentes caractéristiques mécaniques jusqu'au des températures proches de la limite de dégradation des matériaux (graphite souple et métal). Alors que les assemblages structuraux connus avec ou sans colle ne peuvent pas raisonnablement dépasser une température de 400°C, le produit selon l'invention permet de maintenir ces propriétés mécaniques jusqu'à la température d'oxydation du graphite.

Une feuille de graphite souple connue de type Papyex® 1600° convient pour fabriquer le produit selon l'invention.

En utilisant une feuille de type Papyex® 1600°, cette invention repousse d'au moins 100°C à 150°C la possibilité d'utilisation de joints plats en graphite souple pour étanche des systèmes à hautes pressions de fluide.

La structure de l'assemblage selon l'invention permet également, par un dépôt de faible épaisseur d'un agent fonctionnalisant sur chaque interface entre le métal et le graphite, de fonctionnaliser chaque interface entre le métal et le graphite sans nuire pour autant à l'excellente tenue mécanique de la dite structure multicouche.

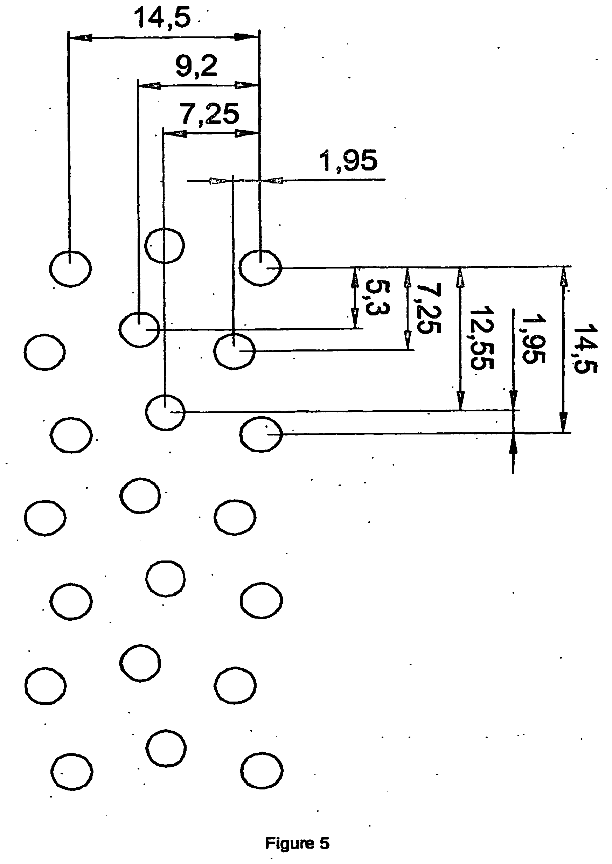

Le principe de l'invention consiste à lier par ancrage mécanique des feuilles de graphite souple et des feuilles métalliques minces perforées à picot. La particularité de la solution proposée tient à la combinaison des moyens suivants :
(a) La planché composite comprend (2n+1) couches alternées dont (n+1) couches de graphite souple et n couches de métal, avec n ≥ 2. Les couches externes sont des couches de graphite souple. Ainsi, une réalisation avec n=2 montre l'empilement suivant:
   graphite souple / feuille de renfort / graphite souple / feuille de renfort / graphite souple.
   L'épaisseur des feuilles de graphite souple peut être égale ou différente ; de même, leur densité peut être égale ou différente.
(b) Les feuilles de renfort métallique sont des feuilles dont l'épaisseur individuelle ne dépasse pas 60 microns. La nature et l'épaisseur des feuilles de renfort métallique peut être égale ou différente. Le matériau desdites feuilles de renfort métalliques est sélectionné dans le groupe composé de : acier, acier inoxydable, nickel, alliages de nickel, aluminium, alliages d'aluminium, cuivre, alliages de cuivre.
(c) Les feuilles métalliques sont perforées de manière produire des picots de faible hauteur, typiquement une hauteur ne dépassant pas 860 microns par rapport au plan de la feuille. Au delà, les picots pénètrent mal dans un graphite souple de densité 1 g/cm³ lors de l'étape d'assemblage par colaminage. L'accrochage de la feuille de graphite souple sur l'insert perforé à picot n'est alors plus suffisant pour assurer des performances mécaniques optimales. La figure 5 montre un mode de réalisation pour une feuille métallique perforée qui peut être utilisée dans le cadre de la présente invention.
   Cette perforation de la feuille métallique peut être effectuée avec une aiguille ronde présentant quatre pans : lorsqu'elle pénètre le métal, elle perce un trou en cassant la tôle en quatre pans qui sont ensuite pliés dans le sens d'avancement de l'aiguille. Ainsi, on obtient un picot qui présente typiquement quatre pointes dont la hauteur théorique est au plus la moitié du diamètre du trou. La figure 5 montre l'agencement des trous dans une feuille en acier inoxydable 316 d'épaisseur 50 µm selon un mode de réalisation de la présente invention. Pour obtenir, par la suite, une structure multicouche facilement découpable et suffisamment résistante mécaniquement, on utilise une feuille métallique en acier inoxydable d'épaisseur idéalement comprise entre 40 et 60 µm. Le diamètre de trou est avantageusement compris entre 0,8 et 1,72 mm.
(d) Les épaisseurs des feuilles de graphite souple sont limitées de telle sorte que le nombre de couches de graphite ne soit pas inférieur à environ 1,5 par millimètre d'épaisseur de la structure totale avant compression entre brides.

La limitation des épaisseurs des feuilles de renfort à 60 microns ou moins, permet de conserver une grande facilité de découpe des joints à partir de surfaces pleines, contrairement à ce qui se pratique avec des renforts multiples de plus grandes épaisseurs. La solution proposée permet de découper des formes avec des outils simples tels que : emporte-pièces, massicot, lame coupante. Les solutions traditionnelles fondées sur l'emploi de feuilles de 100 microns d'épaisseur ou plus requièrent l'emploi de techniques plus sophistiquées telles que la découpe au jet d'eau ou l'emploi d'outils tournants sur de telles structures multicouches. Cette facilité d'emploi est un avantage appréciable pour les découpeurs de joints en termes d'économie et de souplesse d'opérations.

Dans un mode de réalisation particulier, la planche composite selon l'invention est **caractérisée en ce que** les feuilles de graphite souple sont toutes d'une épaisseur inférieure à 0,6 mm et présentent toutes une densité maximale de 1,3 g/cm³.

Dans un autre mode de réalisation particulier, qui peut être combiné avec le précédent, la planche composite selon l'invention est **caractérisée en ce que** les feuilles de graphite souple situées sur les faces supérieure et inférieure de l'empilement sont réalisées avec du graphite souple dont la densité est inférieure à celle de l'autre ou des autres feuilles de graphite.

Dans encore un autre mode de réalisation particulier la planche composite selon l'invention est **caractérisée en ce que** la densité des feuilles de graphite situées sur les faces externes de l'empilement ne dépasse pas 0,7 g/cm³.

L'invention présente de nombreux avantages. Le premier avantage concerne le procédé de fabrication de la planche composite : on n'a pas besoin de colle ou autre liant. La colle ou le liant sont des éléments faibles pour l'utilisation prolongée à haute température : il n'y a pas de colle qui puisse être utilisée, dans la pratique industrielle, de manière prolongée à des températures supérieures à 300°C, tandis que l'assemblage selon le procédé décrit par le brevet US 6,258,457 ne permet pas une utilisation prolongée au delà de 400°C.

Le deuxième avantage concerne la qualité de l'accrochage mécanique entre les couches : l'accrochage mécanique selon l'invention réduit fortement les risques de fluage des feuilles de graphite souple du fait d'une structure de maintien en trois dimensions, même en cas de serrage excessif des brides. Ce fluage dans le sens parallèle aux couches peut avoir lieu entre deux couches ou à l'intérieur d'une couche de graphite. Il conduit généralement à un relâchement des contraintes de serrage du joint, voire à la destruction totale du joint.

Dans les conditions d'un essai normalisé dont les détails sont décrits dans l'exemple 2, on trouve qu'un joint circulaire (n = 3) d'épaisseur 2 mm, de diamètre extérieur 92 mm et de diamètre intérieur 49 mm présente une résistance mécanique au fluage jusqu'à une pression d'assise sur le joint supérieure à 200 MPa, préférentiellement supérieure à 230 MPa et encore plus préférentiellement supérieure à 250 MPa. Dans les mêmes conditions d'essai normalisé, on mesure un taux de fuite inférieur à 10⁻⁴ mb*l / s*m, et préférentiellement inférieur à 5 10 ⁻⁵ mb*l / s*m.

Le troisième avantage concerne la tenue en température du complexe composite selon l'invention. La solution d'accrochage par ancrage selon l'invention permet de réaliser des structures multicouches avec des propriétés mécaniques équivalentes, voire supérieures à celles habituellement offerte sur le marché à partir d'inserts plats collés de 50 microns d'épaisseur (Sigraflex^{®} HD et Papyex^{®} HP). Elle apporte à ces structures existantes, outre une contrainte de serrage maximale admissible équivalente, voire supérieure à température ambiante, un maintien bien meilleur de cette caractéristique mécanique à chaud jusqu'à 550°C en continu (600°C en pointe) lorsqu'on la couple avec la nuance de graphite souple Papyex® 1600° ou jusqu'à 500°C pour la nuance standard Papyex® I980. Un joint composite selon l'invention peut être utilisé à une température comprise entre 450°C et 550°C pour une durée cumulée supérieure à 24 heures.

Enfin, le procédé d'ancrage mécanique est bien plus simple à réaliser que les procédés d'assemblage connus, avec ou sans colle ou liant. Il permet d'obtenir des coûts de fabrication réduit.

La seule contrainte, imposée par la présence de feuilles de graphite souple de faible épaisseur dans la structure est de maintenir la hauteur des picots résultant de la perforation du métal à des hauteurs faibles. La hauteur d'un picot au-dessus de la feuille métallique doit être inférieure à 1,3 fois l'épaisseur des feuilles de graphite souple à agrafer. Au-delà de cette valeur on observe lors des opérations de colaminage des déchirements de feuilles et/ou la présence de zones où les couches sont mal ou peu liées entre elles, compromettant l'intégrité mécanique des joints découpés « à cheval » sur ces défauts.

On peut constater que la combinaison de tous ces moyens conduit à un résultat nouveau et avantageux : des planches composites que l'on peut produire à bas coûts suivant des procédés continus simples, qui peuvent être découpées avec une grande facilité pour obtenir les formes de joints désirées, qui ne contiennent aucune colle ou élément fragile thermiquement, et qui une fois découpées donneront des joints qui sont à la fois très performants en termes d'étanchéité et mécaniquement insensibles aux températures d'utilisation tant que celles-ci n'atteignent pas des valeurs où commence l'oxydation des feuilles de graphite souple (environ 500°C, voire 550°C).

Un autre avantage majeur de la présente invention implique la possibilité de modifier l'interface entre le graphite souple et l'insert de métal, sans pour autant dégrader la tenue mécanique à chaud de l'assemblage. L'inventeur a découvert qu'un dépôt de substances même susceptibles de se dégrader en température ne nuisait pas à la tenue mécanique du joint selon la structure multicouche à picots décrite pourvu que l'épaisseur de ce dépôt sur l'insert ne dépasse pas 10 µm. Avantageusement, cette fonctionnalisation peut être sélectionnée parmi le groupe composé de :
(a) dépôt d'une couche de caoutchouc nitrile,
(b) dépôt d'une couche ou feuille de polyoléfine,
(c) dépôt d'une couche ou feuille de polymère fluoré,
(d) dépôt d'une couche ou feuille de polymère fluoré élastomère thermoplastique.

A titre d'exemple, l'inventeur a appliqué une légère couche d'adhésif (type 3M75) sur l'interface graphite - métal. Cette couche permet de rendre encore plus facile la découpe de joints dont la largeur de piste est inférieure à 10 mm sans risque de délaminage lors du poinçonnage.

L'inventeur a appliqué ce principe à un insert en aluminium perforé à bas coût. Pour éviter tout risque de corrosion galvanique de l'insert en contact avec le graphite, l'insert a été protégé par cataphorèse d'une couche fine de peinture anti-corrosion. Les propriétés mécaniques du joint ainsi fabriqué restent équivalentes à celle de la structure vierge tout en s'affranchissant des problèmes de corrosion galvanique lié à l'utilisation d'insert métallique à bas coût (acier bas carbone, aluminium ...).

Dans le cadre de la présente invention, l'inventeur a réalisé d'autres modifications de l'interface graphite - métal pouvant améliorer l'étanchéité des joints sans pour autant en dégrader la résistance mécanique grâce à la présence d'un ancrage mécanique comme décrit ci-dessus. Ainsi, la modification de l'interface selon l'invention peut faire intervenir d'autres agents fonctionnalisants tels que les polymères thermoplastiques (polyoléfines, PTFE...), les élastomères thermoplastiques (caoutchoucs nitriles, etc...).

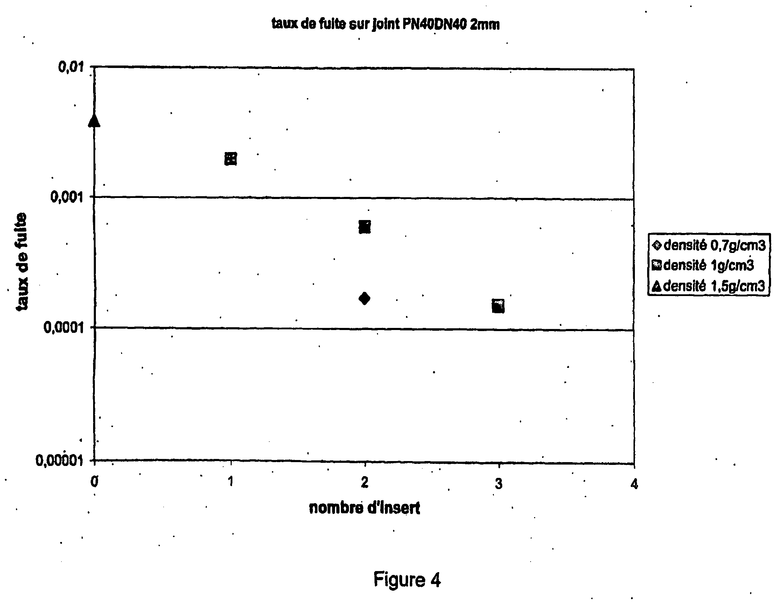

L'inventeur a constaté qu'à épaisseur totale égale et à pression de serrage entre brides égales, un joint préparé à partir d'une planche composite selon l'invention procure des niveaux d'étanchéité d'autant plus élevés que l'empilement comprend de couches et donc d'interfaces fonctionnalisées. Ce résultat est illustré par la courbe fournie en figure 4. Ainsi pour un joint d'épaisseur totale de 2 mm, un empilement de 3 couches de graphite souples de densité proche de 1 g/cm³ et de 2 couches de métal avec les épaisseurs :
0,65 mm / 0,05 mm / 0,6 mm / 0,05 mm /. 0,65 mm
procurera à pression de serrage égale un degré d'étanchéité significativement meilleur qu'un empilement de trois couches du même graphite souple et d'une couche du même métal avec les épaisseurs :
0,90 mm / 0,05 mm / 0,90 mm,
toutes choses égales par ailleurs (même nature des feuilles de renforcement, même technique d'accrochage, même nature des feuilles de graphite souple et de métal, à l'épaisseur près).

L'invention permet de réaliser des joints présentant une contrainte maximale admissible QSₘₐₓ, déterminée selon la norme EN 13555 à 400°C, supérieure à 180 MPa, et préférentiellement supérieure à 190 MPa. Dans un mode particulier de réalisation, au moins une des faces externes du joint est revêtu d'un revêtement antiadhésif.

L'invention sera mieux comprise à l'aide des exemples, qui n'ont toutefois pas de caractère limitatif.

### Exemples

### Exemple 1 :

On a réalisé une planche composite en empilant de manière alternée quatres feuilles de graphite souple produite par la société Carbone Lorraine, nuance Papyex® 1600°, densité 1 g/cm³, épaisseur 0,5 mm (feuilles approvisionnées en rouleaux de 1 m de largeur et 300 m le longueur), et trois feuilles d'acier inoxydable, nuance 316, épaisseur 50 microns, perforations par des trous de diamètre 1,2 mm répartis de façon homogène avec une densité de 4 perforations par cm², et une hauteur des picots résultant des perforations de 650 microns au dessus du plan des feuilles (feuilles de 1 m de large et 300 m de long approvisionnées en bobines). L'épaisseur finale du joint fait 2 mm.

Après un maintien à 550°C pendant 48 heures du joint sous une précontrainte de 20 MPa, la mesure de la contrainte maximale admissible QSₘₐₓ à 550°C donne une valeur proche de 200 MPa selon la norme EN 13555.

### Exemple 2 :

On a réalisé une planche composite en empilant de manière alternée quatre feuilles de graphite souple produite par la société Carbone Lorraine, nuance Papyex® I980, densité 1 g/cm³, épaisseur 0,5 mm (feuilles approvisionnées en rouleaux de 1 m de largeur et 300 m le longueur), et trois feuilles d'acier inoxydable, nuance 316, épaisseur 50 microns, perforations par des trous de diamètre 1,2 mm répartis de façon homogène avec une densité de 4 perforations par cm², et une hauteur des picots résultant des perforations de 650 microns au dessus du plan des feuilles (feuilles de 1 m de large et 300 m de long approvisionnées en bobines). Ces feuilles d'acier sont revêtues des deux côtés d'une épaisseur de 5 µm de caoutchouc nitrile.

Des planches composites ont été réalisées par colaminage en continu de sept couches (4 couches de graphite souple, 3 couches métalliques perforées), avec une épaisseur totale d'environ 2 mm. En sortie de colaminage les produits sont conservés à plat et découpés en planches de dimensions 1 m x 1 m.

Certaines de ces planches ont être découpées en joints circulaires à l'aide de simples emporte-pièces. Un tel joint de diamètre extérieur 92 mm et de diamètre intérieur 49 mm (épaisseur totale 2 mm) a été caractérisé dans les conditions suivantes selon le standard VDI 2440 :
- serrage entre brides normalisées forme E DN40 / PN40 selon DIN 2635 ;
- pression spécifique exercée sur les faces du joint : 30 MPa ;
- cyclage thermique de l'ensemble joint / bride : 1 fois entre 25°C et 300°C ; maintien à 300°C pendant 48h.
- mesure du taux de fuite avec l'ensemble joint / bride : pression d'hélium à l'intérieur des brides de 1 bar.

Le taux de fuite mesuré a été de 6 10⁻⁵ mb*l / s*m.

A titre de comparaison, on a fabriqué une planche composite à partir d'un empilement des mêmes matériaux, mais avec 3 couches seulement dont les épaisseurs étaient les suivantes : 1 mm / 0,1 mm / 1 mm.

Le taux de fuite, mesure pour un joint de mêmes dimensions et dans les mêmes conditions opératoires, a été de 2* 10 ⁻³ mb*l / s*m.

La forte résistance mécanique au fluage dans le sens parallèle aux couches jusqu'à 250 MPa en pression d'assise sur le joint pour ce type de joint en structure multicouche est conforme à celle que l'on mesure sur des structures équivalentes fabriquées à partir d'un assemblage successif de feuillard plan collé sur des feuilles de graphite souple. Cependant, on a trouvé que le joint selon l'invention garde cette résistance au fluage jusqu'à une température de 500°C en service continu et à l'air, alors qu'un joint sans accrochage mécanique selon l'état de la technique montre un fluage significatif à des températures plus faibles.

La mesure de la contrainte maximale admissible QSₘₐₓ à 400°C donne une valeur proche de 200 MPa selon la norme EN 13555.

Cette mesure surpasse les mesures habituelles sur des assemblages selon l'état de la technique. Les valeurs de Qsₘₐₓ à 400°C ne dépassent alors pas les 150 MPa.

### Exemple 3 :

Les structures multicouches classiques (telles que : Sigraflex Select et HD, où Papyex® HP) ne permettent en outre pas de combiner une étanchéité conforme au standard VDI 2440 (TA Luft) avec une telle tenue mécanique à haute température et une haute performance mécanique sans l'adjonction d'une bague métallique étanchant la tranche interne du joint comme décrit dans le brevet US 6,962,349.

La découpe à la dimension du joint dans la planche par l'utilisateur ne permet alors pas de garantir le niveau de fuite du joint découpé requis par la réglementation sans maîtrise du procédé d'adjonction de ladite bague.

On peut toutefois noter que la structure selon notre invention combinée à la dite bague métallique permet d'obtenir des résultats conformes à la norme VDI 2440 (TA Luft) même sans l'addition d'agents fonctionnalisants et ceci malgré le fait que toutes les couches métalliques soient perforées, contrairement à ce qui est décrit dans US 6,962,349.

Le taux de fuite mesuré a été de 8,9 10⁻⁵ mb*l / s*m sur une structure multicouche de 2 mm d'épaisseur comportant 3 renforts métalliques perforés du même type que sur les exemples précédents. Le graphite des couches extérieures sont en Papyex® I980 d'épaisseur 0,5 mm et densité 0,7 g/cm³ alors que les couches intérieures ont une densité de 1,1 g/cm³ pour une épaisseur de 0,6 mm.

### Exemple 4 :

On a réalisé une planche composite selon l'invention en empilant de manière alternée six feuilles de graphite souple produite par la société Carbone Lorraine, nuance Papyex® N998, densité 1 g/cm³, épaisseur 0,5 mm (feuilles approvisionnées en rouleaux de 1 m de largeur et 300 m le longueur), et cinq feuilles d'acier inoxydable, nuance 316, épaisseur 50 microns (feuilles de 1 m de large et 300 m de long approvisionnées en bobines). Les feuilles d'acier comportaient des perforations par des trous de diamètre 1,2 mm répartis de façon homogène avec une densité de 4 perforations par cm² ; la hauteur des picots résultant des perforations était de 650 microns au dessus du plan des feuilles.

Des planches composites ont été réalisées par colaminage en continu de onze couches (6 couches de graphite souple, 5 couches métalliques perforées), avec une épaisseur totale d'environ 3 mm. En sortie de colaminage les produits ont été conservés à plat et découpés en planches de dimensions 1 m x 1 m.

3 joints de grand diamètre 540 mm pour l'extérieur et 406,5 mm pour l'intérieur, découpés à partir de ces planches composites, ont été comprimés sous une pression d'assise de 120 MPa. On a fait subir à ces joints un maintien en température à 350°C pendant 2 h. On a mesuré après retour à température ambiante, la variation relative d'épaisseur Δe/e et la variation relative de surface Δs/s. Ceci permet d'évaluer sur des critères géométriques le fluage à chaud des joints.

Les résultats sont consignés dans le tableau suivant :

| Mesures | Joint 1 | Joint 2 | Joint 3 |
|---|---|---|---|
| Δe/e | 6.65% | 5.71% | 7.10% |
| Δs/s | 1.01% | 0.67% | 0.59% |

Dans ces conditions de serrage et de température et malgré les effets de la dilatation différentielle entre les différentes couches de graphite et de métal, ce joint de grande dimension résiste parfaitement au phénomène de fluage.

Aucun joint plat à base de graphite souple n'atteint des valeurs aussi faible. La plupart auront un Δe/e > 10% et un Δs/s > 5%.

L'ancrage mécanique des différentes couches offre donc une tenue mécanique supérieure à ce produit par rapport au autres solutions existantes et ce, surtout à des températures supérieures à 350°C

## Revendications

1. Planche composite réalisée par empilement alterné de (n+1) feuilles (10, 11) de graphite souple et de (n) feuilles (20) de renfort métalliques perforées à picots, de manière à ce que la première et la dernière feuille dudit empilement alterné soient des feuilles de graphite souple,
la dite planche composite étant **caractérisée en ce que** :
a) n ≥ 2 ;
b) les épaisseurs des feuilles de graphite souple utilisées peuvent être égales ou différentes, et sont telles que toute tranche d'épaisseur de 2 mm de la planche composite
(i) comporte au moins 3 couches de graphite souple,
(ii) présente une masse de graphite par unité de surface d'au plus 2,34 kg/m² ;
c) pour chacune des dites feuilles de renfort métalliques perforées, les picots présents sur ladite feuille ont une hauteur par rapport à la surface de ladite feuille qui ne dépasse pas 1,3 fois l'épaisseur de la plus fine des couches de graphite souple à laquelle elle est attachée;
d) l'épaisseur individuelle des feuilles de renfort métallique ne dépasse pas 60 µm.

2. Planche composite selon la revendication 1, **caractérisée en ce que** lesdites feuilles de graphite souple sont toutes d'une épaisseur inférieure à 0,6 mm et présentent toutes une densité maximale de 1,3 g/cm³.

3. Planche composite selon la revendication 1 ou 2, **caractérisée en ce que** les feuilles de graphite souple situées sur les faces supérieure et inférieure de l'empilement sont réalisées avec du graphite souple dont la densité est inférieure à celle de l'autre ou des autres feuilles de graphite.

4. Planche composite selon la revendication 1 ou 3, **caractérisée en ce que** la densité des feuilles de graphite situées sur les faces externes de l'empilement ne dépasse pas 0,7 g/cm³.

5. Planche composite selon l'une quelconque des revendications 1 à 4, **caractérisé en ce qu'**elle comporte en plus au moins une interface métal / graphite fonctionnalisée d'une épaisseur inférieure à 10 µm.

6. Planche composite selon la revendication 5, **caractérisée en ce que** la dite fonctionnalisation est sélectionnée parmi le groupe composé de :
(a) dépôt d'une couche de caoutchouc nitrile,
(b) dépôt d'une couche ou feuille de polyoléfine,
(c) dépôt d'une couche ou feuille de polymère fluoré,
(d) dépôt d'une couche ou feuille de polymère fluoré élastomère thermoplastique.

7. Planche composite selon une quelconque des revendications 1 à 6, **caractérisée en ce que** le matériau desdites feuilles de renfort métalliques est sélectionné dans le groupe composé de : acier, acier inoxydable, nickel, alliages de nickel, aluminium, alliages d'aluminium, cuivre, alliages de cuivre.

8. Planche composite selon l'une quelconque des revendications 1 à 7, **caractérisée en ce que** son épaisseur est d'environ 2 mm, et **en ce qu'**elle permet, par découpe, de produire un joint circulaire de diamètre extérieur 92 mm, de diamètre intérieur de 49 mm qui présente une résistance au fluage parallèle aux couches jusqu'à une pression d'assise sur le joint supérieure à 200 MPa, préférentiellement supérieure à 230 MPa et encore plus préférentiellement supérieure à 250 MPa, déterminée dans les conditions suivantes :
- serrage entre brides normalisées forme E DN40 / PN40 selon DIN 2635 ;
- pression spécifique exercée sur les faces du joint : 30 MPa ;
- cyclage thermique de l'ensemble joint / bride : 1 fois entre 25°C et 300°C ; maintien à 300°C pendant 48h
- mesure de la résistance mécanique Qsₘₐₓ selon la norme EN 13555.

9. Planche composite selon la revendication 8, **caractérisée en ce que** dans les conditions indiquées, ledit joint présente un taux de fuite, mesuré avec l'ensemble joint / bride à une pression d'hélium à l'intérieur des brides de 1 bar, inférieur à 10⁻⁴ mb*l / s*m, et préférentiellement inférieur à 5 10 ⁻⁵ mb*l / s*m.

10. Joint d'étanchéité plan, produit par découpe d'une planche selon l'une quelconque des revendications 1 à 9.

11. Joint circulaire d'étanchéité découpé dans une planche composite selon la revendication 9, **caractérisé en ce que** sa résistance au fluage parallèle aux couches est supérieure à 200 MPa, préférentiellement supérieure à 230 MPa et encore plus préférentiellement supérieure à 250 MPa, déterminée sur un joint d'épaisseur 2 mm, de diamètre extérieur 92 mm, de diamètre intérieur de 49 mm en pression d'assise sur le joint dans les conditions suivantes :
- serrage entre brides normalisées forme E DN40 / PN40 selon DIN 2635 ;
- pression spécifique exercée sur les faces du joint : 30 MPa ;
- cyclage thermique de l'ensemble joint / bride : 1 fois entre 25°C et 300°C ;
- maintien à 300°C pendant 48h ;
- mesure de la résistance mécanique Qsₘₐₓ selon la norme EN 13555.

12. Joint d'étanchéité selon une des revendications 10 ou 11, **caractérisé en ce qu'**au moins une de ses faces externes a été revêtue d'un revêtement antiadhésif.

13. Joint d'étanchéité selon l'une quelconque des revendications 10 à 12, **caractérisé en ce qu'**il présente une contrainte maximale admissible QSₘₐₓ, déterminée selon la norme EN 13555 à 400°C, supérieure à 180 MPa, et préférentiellement supérieure à 190 MPa.

14. Utilisation d'un joint selon une quelconque des revendications 10 à 13 à une température ne dépassant pas 600°C, et préférentiellement à une température comprise entre 350°C et 550°C, et encore plus préférentiellement à une température comprise entre 400°C et 500°C.

15. Utilisation d'un joint selon une quelconque des revendications 10 à 14 à une température comprise entre 450°C et 550°C pour une durée cumulée supérieure à 24 heures.

## Patentansprüche

1. Verbundplatte, hergestellt durch abwechselndes Aufschichten von (n+1) Weichgraphitfolien (10, 11) und (n) perforierten metallischen Verstärkungsfolien (20) mit Noppen, derart, dass die erste und letzte Folie der abwechselnden Aufschichtung Weichgraphitfolien sind,
wobei die Verbundplatte **dadurch gekennzeichnet ist, dass**:
a) n ≥ 2;
b) die Dicken der verwendeten Weichgraphitfolien gleich oder verschieden sein können und so gewählt sind, dass jede 2 mm dicke Scheibe der Verbundplatte
(i) mindestens 3 Weichgraphitschichten umfasst,
(ii) eine Graphitmasse pro Flächeneinheit von höchstens 2,34 kg/m² aufweist;
c) bei jeder der perforierten metallischen Verstärkungsfolien die auf der Folie vorhandenen Noppen eine Höhe bezogen auf die Fläche der Folie haben, die das 1,3-fache der Dicke der dünnsten Weichgraphitschicht, an der sie angebracht ist, nicht übersteigt;
d) die individuelle Dicke der metallischen Verstärkungsfolien 60 µm nicht überschreitet.

2. Verbundplatte nach Anspruch 1, **dadurch gekennzeichnet, dass** die Weichgraphitfolien alle eine Dicke unter 0,6 mm haben und alle eine maximale Dichte von 1,3 g/cm³ aufweisen.

3. Verbundplatte nach Anspruch 1 oder 2, **dadurch gekennzeichnet, dass** die Weichgraphitfolien, die auf der Ober- und Unterseite der Aufschichtung liegen, aus einem Weichgraphit hergestellt sind, dessen Dichte geringer ist als die der anderen Graphitschicht oder -schichten.

4. Verbundplatte nach Anspruch 1 oder 3, **dadurch gekennzeichnet, dass** die Dichte der Graphitfolien, die auf den Aussenseiten der Aufschichtung liegen, 0,7 g/cm³ nicht übersteigt.

5. Verbundplatte nach irgendeinem der Ansprüche 1 bis 4, **dadurch gekennzeichnet, dass** sie zusätzlich mindestens eine funktionalisierte Metall-Graphit-Grenzfläche mit einer Dicke unter 10 µm aufweist.

6. Verbundplatte nach Anspruch 5, **dadurch gekennzeichnet, dass** die Funktionalisierung ausgewählt ist aus der Gruppe bestehend aus:
(a) Aufbringen einer Nitrilkautschukschicht,
(b) Aufbringen einer Polyolefinschicht oder -folie,
(c) Aufbringen einer Fluorpolymerschicht oder -folie,
(d) Aufbringen einer thermoplastischen elastomeren Fluorpolymerschicht oder -folie.

7. Verbundplatte nach irgendeinem der Ansprüche 1 bis 6, **dadurch gekennzeichnet, dass** der Werkstoff der metallischen Verstärkungsfolien ausgewählt ist aus der Gruppe bestehend aus: Stahl, rostfreier Stahl, Nickel, Nickellegierungen, Aluminium, Aluminiumlegierungen, Kupfer, Kupferlegierungen.

8. Verbundplatte nach irgendeinem der Ansprüche 1 bis 7, **dadurch gekennzeichnet, dass** ihre Dicke etwa 2 mm beträgt und dass sie es gestattet, durch Stanzen eine Runddichtung mit Aussendurchmesser 92 mm, Innendurchmesser 49 mm zu erzeugen, welche eine schichtenparallele Kriechfestigkeit bis zu einem Auflagedruck auf die Dichtung von mehr als 200 MPa, bevorzugt mehr als 230 MPa und besonders bevorzugt mehr als 250 MPa aufweist, die unter folgenden Bedingungen ermittelt wird:
- Einspannen zwischen genormten Flanschen Form E DN40/PN40 gemäss DIN 2635 ;
- Spezifischer Druck auf die Flächen der Dichtung: 30 MPa ;
- Thermische Wechselbelastung des Dichtung-Flansch-Systems: 1 x zwischen 25°C und 300°C; Halten bei 300°C während 48 h ;
- Messen der mechanischen Festigkeit Qsₘₐₓ gemäss Norm EN 13555.

9. Verbundplatte nach Anspruch 8, **dadurch gekennzeichnet, dass** die Dichtung unter den genannten Bedingungen eine Leckrate aufweist, gemessen mit dem Dichtung-Flansch-System bei einem Heliumdruck im Innern der Flansche von 1 bar, die kleiner als 10⁻⁴ mb*l/s*m und vorzugsweise kleiner als 5 10⁻⁵ mb*l/s*m ist.

10. Flachdichtung, hergestellt durch Stanzen einer Platte nach irgendeinem der Ansprüche 1 bis 9.

11. Runddichtung, ausgestanzt aus einer Verbundplatte nach Anspruch 9, **dadurch gekennzeichnet, dass** ihre schichtenparallele Kriechfestigkeit grösser als 200 MPa, bevorzugt grösser als 230 MPa und besonders bevorzugt grösser als 250 MPa ist, ermittelt an einer Dichtung von 2 mm Dicke, 92 mm Aussendurchmesser, 49 mm Innendurchmesser im Auflagedruck auf die Dichtung unter folgenden Bedingungen:
- Einspannen zwischen genormten Flanschen Form E DN40/PN40 gemäss DIN 2635 ;
- Spezifischer Druck auf die Flächen der Dichtung: 30 MPa ;
- Thermische Wechselbelastung des Dichtung-Flansch-Systems: 1 x zwischen 25°C und 300°C; Halten bei 300°C während 48 h ;
- Messen der mechanischen Festigkeit Qs max gemäss Norm EN 13555.

12. Dichtung nach einem der Ansprüche 10 oder 11, **dadurch gekennzeichnet, dass** mindestens eine ihrer Aussenflächen mit einer antiadhäsiven Beschichtung überzogen wurde.

13. Dichtung nach irgendeinem der Ansprüche 10 bis 12, **dadurch gekennzeichnet, dass** sie eine nach der Norm EN 13555 bei 400°C bestimmte maximal zulässige Spannung von mehr als 180 MPa und vorzugsweise mehr als 190 MPa aufweist.

14. Verwendung einer Dichtung nach irgendeinem der Ansprüche 10 bis 13 bei einer Temperatur, die 600°C nicht übersteigt, bevorzugt bei einer Temperatur zwischen 350°C und 550°C und besonders bevorzugt bei einer Temperatur zwischen 400°C und 500°C.

15. Verwendung einer Dichtung nach irgendeinem der Ansprüche 10 bis 14 bei einer Temperatur zwischen 450°C und 550°C für eine kumulierte Dauer von mehr als 24 Stunden.

## Claims

1. Composite board produced by the alternate stacking of (n+1) sheets (10, 11) of flexible graphite and (n) spiked perforated metal reinforcing sheets (20), so that the first and last sheet in said alternating stack are flexible graphite sheets, said composite sheet being **characterised in that**:
a) n ≥ 2;
b) the thicknesses of the flexible graphite sheets used may be equal or different and are such that any 2 mm thick slice of the composite board
(i) comprises at least 3 layers of flexible graphite,
(ii) has a weight of graphite per unit surface area of no more than 2.34 kg/m²;
c) for each of said perforated metal reinforcing sheets the spikes present on said sheet have a height with respect to the surface of said sheet that does not exceed 1.3 times the finest thickness of the layers of flexible graphite to which it is attached;
d) the individual thickness of the metal reinforcing sheet does not exceed 60 µm.

2. Composite board according to claim 1, **characterised in that** said flexible graphite sheets all have a thickness of less than 0.6 mm and all have a maximum density of 1.3 g/cm³.

3. Composite board according to claim 1 or 2, **characterised in that** the flexible graphite sheets situated on the top and bottom faces of the stack are produced with flexible graphite, the density of which is less than the other graphite sheet or sheets.

4. Composite board according to claim 1 or 3, **characterised in that** the density of the graphite sheets situated on the external faces of the stack do not exceed 0.7 g/cm³.

5. Composite board according to any one of claims 1 to 4, **characterised in that** it also comprises at least one functionalised metal/graphite interface with a thickness of less than 10 µm.

6. Composite board according to claim 5, **characterised in that** said functionalisation is selected from the group composed of:
(a) a deposit of a layer of nitrile rubber,
(b) a deposit of a layer or sheet of polyolefin,
(c) a deposit of a layer or sheet of fluorinated polymer,
(d) a deposit of a layer or sheet of thermoplastic elastomeric fluorinated polymer.

7. Composite board according to any one of claims 1 to 6, **characterised in that** the material of said metal reinforcing sheets is selected from the group composed of: steel, stainless steel, nickel, nickel alloys, aluminium, aluminium alloys, copper, copper alloys.

8. Composite board according to any one of claims 1 to 7, **characterised in that** its thickness is approximately 2 mm and **in that** it makes it possible, by cropping, to produce a circular gasket with an outside diameter of 92 mm and an inside diameter of 49 mm and which has a creep strength parallel to the layers up to a bedding pressure on the gasket greater than 200 MPa, preferentially greater than 230 MPa and even more preferentially greater than 250 MPa, determined under the following conditions:
- clamping between standard flanges form E DN40/PN40 according to DIN 2635;
- specific pressure exerted on the faces of the gasket: 30 MPa;
- thermal cycling of the gasket/flange assembly: once between 25°C and 300°C; maintenance at 300°C for 48 hours;
- measurement of the mechanical strength Qsₘₐₓ according to EN 13555.

9. Composite board according to claim 8, **characterised in that**, under the conditions indicated, said gasket has a leakage level, measured with the gasket/flange assembly at a helium pressure within the flanges of 1 bar, of less than 10⁻⁴ mb*l/s*m, preferentially less than 5 10⁻⁵ mb*l/s*m.

10. Flat gasket, produced by cropping a board according to any one of claims 1 to 9.

11. Circular gasket cropped from a composite board according to claim 9, **characterised in that** its creep strength parallel to the layers is greater than 200 MPa, preferentially greater than 230 MPa and even more preferentially greater than 250 MPa, determined on a gasket with a thickness of 2 mm, an outside diameter of 92 mm, and an inside diameter of 49 mm under bedding pressure on the gasket under the following conditions:
- clamping between standard flanges form E DN40/PN40 according to DIN 2635;
- specific pressure exerted on the faces of the gasket: 30 MPa;
- thermal cycling of the gasket/flange assembly: once between 25°C and 300°C;
- maintenance at 300°C for 48 hours;
- measurement of the mechanical strength Qsₘₐₓ according to EN 13555.

12. Gasket according to one of claims 10 or 11, **characterised in that** at least one of its external faces has been covered with an anti-adhesive covering.

13. Gasket according to any one of claims 10 to 12, **characterised in that** it has a maximum permissible force QSₘₐₓ, determined according to EN 13555 at 400°C, greater than 180 MPa and preferentially greater than 190 MPa.

14. Use of a gasket according to any one of claims 10 to 13 at a temperature not exceeding 600°C, preferentially at a temperature of between 350°C and 550°C, and even more preferentially at a temperature of between 400°C and 500°C.

15. Use of a gasket according to any one of claims 10 to 14 at a temperature of between 450°C and 550°C for a total period greater than 24 hours.
